# EUROPÄISCHE PATENTSCHRIFT

(11) **EP 1 975 074 B1**
(45) Veröffentlichungstag und Bekanntmachung des Hinweises auf die Patenterteilung: **06.11.2013**
(21) Anmeldenummer: 08103093.4
(22) Anmeldetag: 28.03.2008
(51) Int. Cl.: B65B 5/06, B65B 69/00, B65G 15/14, B65G 47/24, B65G 47/252, B65G 59/08

(54) **Vorrichtung und Verfahren zum Be- und Entladen von einer Mehrzahl in einem oben offenen Aufnahmebehältnis angeordneter Gegenstände**
Device and method for loading and unloading a number of objects arranged in a receptacle with an upward opening
Dispositif et procédé de chargement et de déchargement d'une multitude d'objets installés dans un récipient de réception ouvert sur le dessus

(30) Priorität: 30.03.2007 DE 102007015799
(43) Veröffentlichungstag der Anmeldung: 01.10.2008
(73) Patentinhaber: SIG Technology AG, 8212 Neuhausen am Rheinfall (CH)
(72) Erfinder: Diaubalick, Günter, 41564 Kaarst (DE); Grandke, Willy, 24113 Kiel (DE)
(74) Vertreter: Cohausz & Florack

(56) Entgegenhaltungen:
- EP-A- 1 147 988
- DE-A1- 4 127 207
- US-A- 4 798 278

## Beschreibung

Die Erfindung betrifft eine Vorrichtung zum Entladen einer Mehrzahl in oder auf einem oben offenen Aufnahmebehältnis angeordneter Gegenstände, insbesondere Packungen oder Verpackungen aller Art, wobei das Aufnahmebehältnis über eine Zuführeinheit vereinzelt zuführbar ist, wobei eine Schwenkeinheit zur Aufnahme wenigstens eines Aufnahmebehältnisses mittels wenigstens einer Fördereinrichtung vorgesehen ist, wobei die Schwenkeinheit im wesentlichen aus zwei parallelen Ebenen mit variablem Abstand besteht, zwischen denen das wenigstens eine Aufnahmebehältnis gemeinsam mit den darin befindlichen Gegenständen einklemmbar ist, und wobei die Schwenkeinheit ferner eine Arretiereinrichtung zum Festlegen des wenigstens einen Aufnahmebehältnisses durch Verringerung des Abstandes zwischen den beiden Ebenen der Schwenkeinheit aufweist. Die Erfindung betrifft zudem ein entsprechendes Verfahren.

Wenn im Folgenden von 'Aufnahmebehältnissen' die Rede ist, sollen damit sämtliche oben offenen Behälter oder ebene Auflagen umfasst sein. Dabei kann es sich um Kisten, Kartons, Paletten od. dgl. handeln.

Aus verschiedensten Anwendungsbereichen ist es bekannt, in oder auf einem Aufnahmebehältnis in einer Ebene angeordnete Gegenstände zu entladen, damit die Gegenstände zur Weiterbearbeitung, Verpackung o. dgl. vom Aufnahmebehältnis getrennt abtransportiert werden können. Dies geschieht meist mittels Portal- oder Knickarmrobotern, welche mit entsprechenden Saug- oder Greifwerkzeugen ausgestattet sind. Diese Werkzeuge sind aufgrund der Vielzahl der bewegten Teile jedoch verschleißanfällig und wartungsbedürftig und damit kostenintensiv. Darüber hinaus muss die Funktion dieser Vereinzelungselemente bei der Entladung von Gegenständen unterschiedlicher Form und Größe stets neu programmiert werden.

Diese bekannten Maschinen eignen sich auch zum Beladen von einzelnen Gegenständen in oder auf ein Aufnahmebehältnis.

Des Weiteren sind Vorrichtungen bekannt, die in der Lage sind, Aufnahmebehältnisse inklusive der sich darin befindenden Gegenstände um 180° zu drehen und daraufhin die Aufnahmebehältnisse zu entfernen, so dass die Gegenstände mittels Fließband abtransportiert werden können. Die Drehung der Aufnahmebehältnisse kann je nach Vorrichtung auf eine unterschiedliche Art und Weise erfolgen.

So findet z.B. bei einem Vorrichtungstyp (US 6 213 707 B1) die Drehung mittels einer Art von Schaufelbox statt. Hierbei wird ein Behältnis in eine an zwei Seiten offen ausgeführte Schaufelbox geschoben und um eine senkrecht zu den offen ausgeführten Seiten liegende Drehachse der Schaufelbox gedreht. Aus dieser Position können die Aufnahmebehältnisse samt Gegenständen auf ein Fließband geschoben und vorzugsweise in vertikaler Richtung entfernt werden.

Ein anderer Vorrichtungstyp (US 6 398 008 B1) erreicht die Drehung mittels eines rollfähigen Fördergerätes, das zwischen zwei Seitenplatten positioniert ist und diese miteinander verbindet. Hierbei werden die Seitenplatten samt Fördergerät und Aufnahmebehältnis um eine mit den Seitenplatten verbundene Hauptwelle um 180° gedreht, wobei die Gegenstände in dem Aufnahmebehältnis mittels einer sich mitdrehenden Aufnahmeplatte während der halben Drehung gestützt werden. Nach Abführung des Aufnahmebehältnisses über Schienen kann die Aufnahmeplatte samt Gegenständen mittels des rollfähigen Fördergerätes eine weitere 180° Drehung um die Hauptachse in die Ausgangsstellung durchführen, von wo aus die Gegenstände mit einem Förderband abgeführt werden können.

Die zuvor beschriebenen Vorrichtungen ermöglichen zwar ein Entpacken der Aufnahmebehältnisse. Durch den komplizierten Aufbau ist der Entpackungsprozess jedoch nur mit einer recht hohen Anzahl von Arbeitsschritten zu bewältigen.

Der Erfindung liegt daher die Aufgabe zugrunde, die eingangs genannte und zuvor näher beschriebene Vorrichtung und ein entsprechendes Verfahren so auszugestalten und weiterzubilden, dass auf einfache Weise ein Entladen von in einem Aufnahmebehältnis oder auf eine Auflage angeordneter Gegenstände ermöglicht wird. Darüber hinaus soll die Vorrichtung auch zum Beladen geeignet sein.

Vorrichtungsmäßig wird die Aufgabe bei einer Vorrichtung nach dem Oberbegriff von Anspruch 1 dadurch gelöst, dass jedes an der nach dem Verschwenken oben befindlichen Ebene der Schwenkeinheit arretierte Aufnahmebehältnis nach dem Verschwenken der Schwenkeinheit um eine horizontale Schwenkachse von den Gegenständen innerhalb der Schwenkeinheit abhebbar ist.

Verfahrensmäßig erfolgt die Lösung der Aufgabe durch die folgenden Schritte:
- Zuführen eines Aufnahmebehältnisses an eine Schwenkeinheit im Wesentlichen aus zwei parallelen Ebenen mit variablem Abstand,
- Arretieren des Aufnahmebehältnisses auf der Schwenkeinheit mittels einer Arretiereinheit zum Festlegen des Aufnahmebehältnisses durch Verringerung des Abstandes zwischen den beiden Ebenen der Schwenkeinheit,
- Niederhalten der Gegenstände im Aufnahmebehältnis,
- Verschwenken der Schwenkeinheit um 180° um eine horizontale Achse,
- Freigeben der Gegenstände durch Anheben des an der nach dem Verschwenken oben befindlichen Ebene der Schwenkeinheit arretierten Aufnahmebehältnisses und
- Weitertransport der freigegebenen Gegenstände.

Gemäß einer weiteren Lehre der Erfindung ist vorgesehen, dass die Schwenkachse zum Verschwenken der Schwenkeinheit rechtwinklig zur Transportrichtung verläuft. Dies ist besonders zweckmäßig, da durch die nah an die Schwenkeinheit herangeführten Antriebseinrichtungen die Baugröße der erfindungsgemäßen Vorrichtung klein gehalten werden kann und insbesondere die Höhe der Schwenkeinheit im wesentlichen auf ihre Länge begrenzt werden kann. Jedoch ist es auch möglich, die Schwenkachse fluchtend mit der Transportrichtung anzuordnen.

In weiterer Ausgestaltung der Erfindung ist vorgesehen, dass die Schwenkeinheit mehrere parallele Fördereinrichtungen aufweist. Auf diese Weise ist es durch mehrere parallele Linien möglich, entsprechend der Lagenanordnung der Gegenstände im oder auf dem Aufnahmebehältnis die Gegenstände reihenweise einzeln aus der Schwenkeinrichtung abzutransportieren.

Die Erfindung sieht vor, dass die Schwenkeinheit ferner eine Arretiereinrichtung zum Festlegen des wenigstens einen Aufnahmebehältnisses aufweist. Das Arretieren des Aufnahmebehältnisses kann dabei mittels Servoantrieb, pneumatisch oder hydraulisch, erfolgen. Die Arretiereinrichtung kann beispielsweise beidseitig an der Schwenkeinheit installiert sein. Die Arretiereinrichtung kann dabei auch über eine Zentriereinheit verfügen, welche dafür sorgt, dass jedes Aufnahmebehältnis vor dem Einklemmen in der Schwenkeinheit eine vorgegebene Position einnimmt, beispielsweise über formschlüssige diagonal am Aufnahmebehältnis angreifende Zentrierelemente. Die eigentliche Arretierung des Aufnahmebehältnisses in der Schwenkeinheit kann dabei mit üblichen Mitteln, zweckmäßigerweise formschlüssig, erfolgen. Die Arretiereinrichtung kann dazu Arretierelemente aufweisen, welche das Aufnahmebehältnis an einem Trum der Schwenkeinheit positionieren.

Eine weitere Lehre der Erfindung sieht vor, dass der Schwenkeinheit wenigstens eine Übergabeeinheit nachgeschaltet ist. Auf diese Weise ist gewährleistet, dass die zu entladenden Gegenstände unmittelbar der weiteren Verarbeitung zugeführt werden können. Hierbei ist es auch möglich, dass auch die Übergabeeinheit mehrere parallele Fördereinrichtungen aufweist, wenn die zugehörige Schwenkeinheit entsprechend ausgestaltet ist. Die Übergabeeinheit/en kann/können auch oder zusätzlich rechtwinklig zur Richtung der Zuführeinheit angeordnet sein.

Eine weitere Ausgestaltung der Erfindung sieht vor, dass zum Transport der Aufnahmebehältnisse und/oder der vereinzelten Gegenstände angetriebene Rollenbahnen oder andere geeignete Transporteinrichtungen wie Bänder, Ketten, Riemen od. dgl. vorgesehen sind, welche über Antriebs- und/oder Umlenkrollen verfügen. Je nach Geometrie ist es dabei zweckmäßig, dass zwischen Antriebs- und Umlenk- oder weiteren Antriebsrollen zusätzliche Stützelemente wie Bleche, Stege, Schienen, Rollen od. dgl. vorgesehen sind.

Zum Erreichen eines reibungslosen und zügigen Funktionsablaufes ist nach einer weiteren Lehre der Erfindung vorgesehen, dass das Arretieren des Aufnahmebehältnisses und das Niederhalten (Einklemmen) der Gegenstände gleichzeitig erfolgen.

Die Erfindung sieht vor, dass das Verschwenken der Schwenkeinheit um einen Winkel von 180° erfolgt. Dies ist besonders zweckmäßig, da auf diese Weise ein an allen Seiten Wandungen aufweisendes Aufnahmebehältnis gewissermaßen "auf den Kopf gestellt" wird und problemlos angehoben werden kann, um die darin enthaltenen Gegenstände freizugeben. Alternativ ist es auch möglich, die Schwenkeinheit nur um einen Winkel von 90° zu verschwenken, wenn eine solche Schwenkbewegung zur Freigabe oder Vereinzelung der Gegenstände ausreicht.

Um ein Anheften oder Kleben der Gegenstände am Aufnahmebehältnis zuverlässig auszuschließen, sieht eine weitere Ausgestaltung der Erfindung vor, dass die Gegenstände beim Anheben des arretierten und bereits verschwenkten Aufnahmebehältnisses mittels Ausstoßern od. dgl. zuverlässig von diesem getrennt werden. Dazu kann das Aufnahmebehältnis bzw. die Auflage entsprechende Durchbrüche od. dgl. aufweisen.

Nach einer weiteren Lehre der Erfindung ist vorgesehen, dass das arretierte Aufnahmebehältnis nach dem Freigeben der Gegenstände aus der Schwenkeinheit entfernt wird. Dies erfolgt entweder rechtwinklig zur Transportrichtung der Gegenstände oder in einer anderen Ebene, um den Produktionsablauf beim Entladen nachfolgender Aufnahmebehältnisse nicht zu stören.

In weiterer Ausbildung der Erfindung ist vorgesehen, dass die Schwenkeinheit höhenverstellbar ausgeführt ist. Eine solche Ausführung hat den Vorteil, dass nach dem Freigeben der Gegenstände diese in unterschiedlichen Ebenen weitertransportiert werden können.

Dabei können die freigegebenen Gegenstände über in unterschiedlicher Höhe angeordnete Übergabeeinheiten aus der Schwenkeinheit abtransportiert werden, um der weiteren Verarbeitung in der gewünschten Höhe zugeführt werden zu können. Die Transportbänder können jedoch auch geneigt angeordnet oder verschwenkbar ausgebildet sein. Auf diese Weise ist es möglich, trotz der Verschwenkung um beispielsweise 180°, die entladenen Gegenstände in einer beliebigen Höhe weiterzutransportieren.

Schließlich eignet sich die erfindungsgemäße Vorrichtung auch zum Beladen einer Mehrzahl von Gegenständen auf oder in ein entsprechendes Aufnahmebehältnis, wobei die Gegenstände mit dem gewünschten Lagenbild in der Schwenkeinheit unterhalb des auf dem Kopf angeordneten und arretierten Aufnahmebehältnis angeordnet werden, mit diesem verklemmt werden und nach einer Schwenkbewegung, beispielsweise vom 180°, gemeinsam mit dem Aufnahmebehältnis abtransportiert werden können.

Der Funktionsablauf ist für die Nutzung der erfindungsgemäßen Vorrichtung als Be- oder Entladeeinrichtung identisch. Lediglich die Laufrichtung der Transporteinheitsegmente ändert sich, d.h. beim Beladen wird ein Lagenbild übernommen und das Aufnahmebehältnis bzw. die Auflage "aufgesetzt", beim Entladen ein Lagenbild aus dem Aufnahmebehältnis bzw. der Auflage durch das Verfahren auf die Schwenkeinheit aufgelegt und nach dem Abheben des Aufnahmebehältnisses bzw. die Auflage komplett oder vereinzelt abtransportiert.

Die Erfindung wird nachfolgend anhand einer lediglich ein bevorzugtes Ausführungsbeispiel darstellenden Zeichnung näher erläutert. In der Zeichnung zeigen in schematischer Darstellung:
Fig. 1 eine erfindungsgemäße Vorrichtung in Seitenansicht mit einem gefüllten Aufnahmebehältnis in einer Schwenkeinheit,
Fig. 2 eine Seitenansicht der Vorrichtung aus Fig. 1 nach erfolgter Schwenkbewegung beim Weitertransport der Gegenstände,
Fig. 3 eine Draufsicht auf die Vorrichtung aus den Fig. 1 und 2 und
Fig. 4 eine schematische Abfolge des Funktionsablaufs beim Ent- und Beladen.

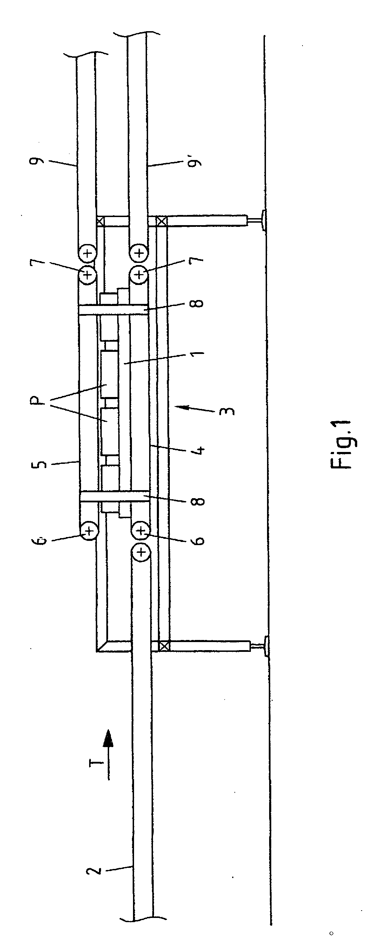

In Fig. 1 ist die erfindungsgemäße Vorrichtung in einer Seitenansicht schematisch dargestellt. Man erkennt ein Aufnahmebehältnis 1, das eine Mehrzahl von zu entladenden Gegenständen, hier Packungen P, enthalten kann, von denen im Ausführungsbeispiel vier in Transportrichtung T hintereinander angeordnet dargestellt sind. Das Aufnahmebehältnis 1 kann je nach seiner Größe noch weitere Gegenstände enthalten, welche parallel zu den dargestellten Gegenständen angeordnet sind und daher in Fig. 1 nicht erkennbar sind. Es versteht sich von selbst, dass statt eines Seitenwandungen aufweisenden Aufnahmebehältnisses auch eine ebene Auflage wie beispielsweise eine Palette verwendet werden kann.

Das Aufnahmebehältnis 1 wird über eine Zuführeinheit 2, im dargestellten und insoweit bevorzugten Ausführungsbeispiel ein Transportband, einer Schwenkeinheit 3 zugeführt, welche im bevorzugten Ausführungsbeispiel wiederum Transportbänder aufweist, nämlich ein Unterband 4 und ein Oberband 5. Zum Transport der Aufnahmebehältnisse 1 sind die Transportbänder 2, 4, 5 angetrieben und weisen daher Antriebsrollen 6 und Umlenkrollen 7 auf, welche der besseren Übersicht halber im dargestellten Ausführungsbeispiel nur für die Schwenkeinheit 3 gezeigt sind.

Ist ein die Gegenstände P enthaltendes Aufnahmebehältnis 1 in die Schwenkeinheit 3 hineintransportiert worden, wird mittels einer Arretiereinrichtung 8 der Abstand zwischen dem parallel angeordneten Unterband 4 und Oberband 5 kontinuierlich verringert und das - ggf. vorher zentrierte - Aufnahmebehältnis 1 mit den darauf oder darin befindlichen Gegenständen P eingeklemmt. Die gesamte Schwenkeinrichtung 3 mit Unterband 4, Oberband 5 und Arretiereinrichtung 8 wird nach dem Einklemmen des Aufnahmebehältnisses 1 im dargestellten und insoweit bevorzugten Ausführungsbeispiel um 180° verschwenkt, und zwar um eine horizontale Schwenkachse, welche in Fig. 1 senkrecht zur Transportrichtung T und Zeichenebene verläuft.

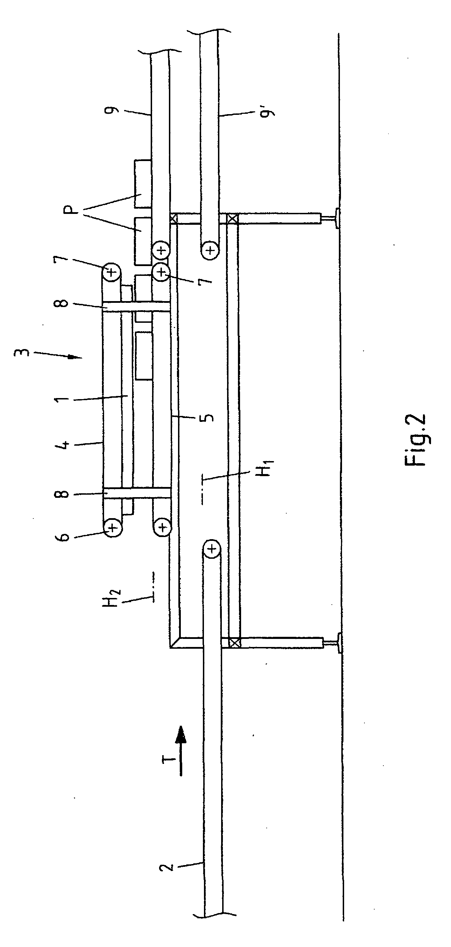

Nach dem Verschwenken befindet sich das Aufnahmebehältnis 1 oberhalb der darin enthaltenen Gegenstände P, wo es, am nunmehr oben befindlichen Unterband 4 arretiert, angehoben wird, so dass die Gegenstände P aus der Schwenkeinheit 3 herausfahren können. In Fig. 2 geschieht dies mittels einer Übergabeeinheit 9, welche in einer Ebene H2 oberhalb der durch die Zuführeinheit 2 gebildeten Ebene H1 angeordnet ist. Dies ist deshalb zweckmäßig, weil so nach dem Verschwenken die Verschwenkeinheit 3 nicht mehr in ihrer Höhe verfahren werden muss.

Bei entsprechender Wahl der Höhe der Schwenkachse ist es jedoch auch möglich, dass die Ebene H1 beibehalten werden kann und eine entsprechende Übergabeeinheit 9' für den Weitertransport der vereinzelten entladenen Gegenstände P sorgt, wie in Fig. 1 und 2 strichpunktiert angedeutet ist.

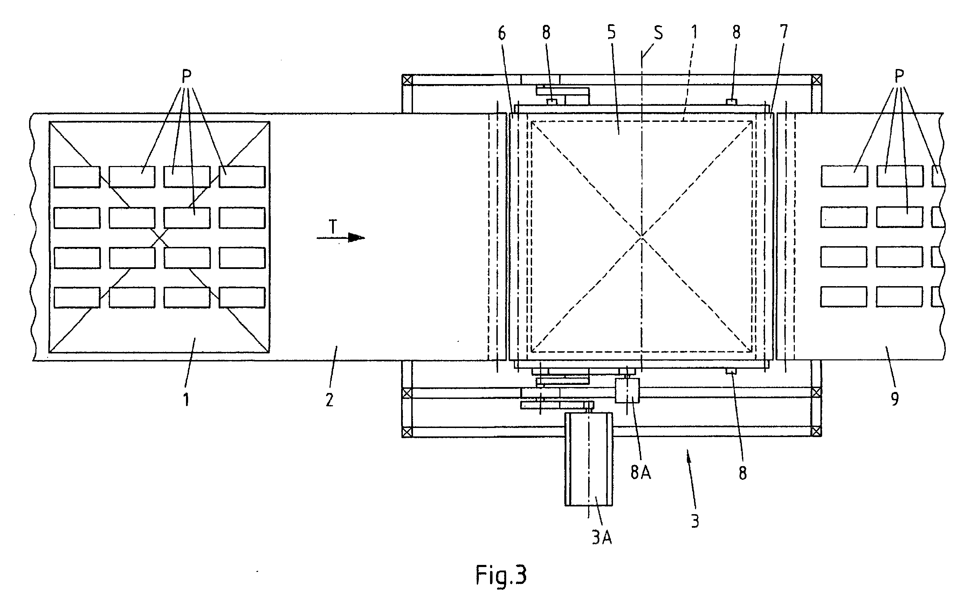

Fig. 3 zeigt nun die erfindungsgemäße Vorrichtung in Draufsicht. Hierbei wird zunächst deutlich, dass im dargestellten und insoweit bevorzugten Ausführungsbeispiel jedes Aufnahmebehältnis sechzehn Gegenstände P in einem 4-4er Lagenbild enthält. Nach dem Zuführen des befüllten Aufnahmebehältnis 1 in die Schwenkeinheit 3 wird die Schwenkeinheit 3 mittels eines Antriebes 3A in an sich bekannter Weise um eine horizontale Schwenkachse um 180° verschwenkt, nachdem das Aufnahmebehältnis 1 durch Zusammenfahren von Oberband 5 und Unterband 4 mittels einem Antrieb 8A der Arretiereinrichtung eingeklemmt und arretiert worden ist. Nach dem Anheben des Unterbandes 4 mit dem daran befindlichen Aufnahmebehältnis 1 können die Gegenstände P über die Zuführeinheit 9 abgeführt werden und nach dem Zurückschwenken in die Übernahmeposition gleichzeitig oder danach das - nunmehr leere - Aufnahmebehältnis 1 aus der Schwenkeinheit entfernt werden, im dargestellten Ausführungsbeispiel über die Übergabeeinrichtung 9' in Transportrichtung T.

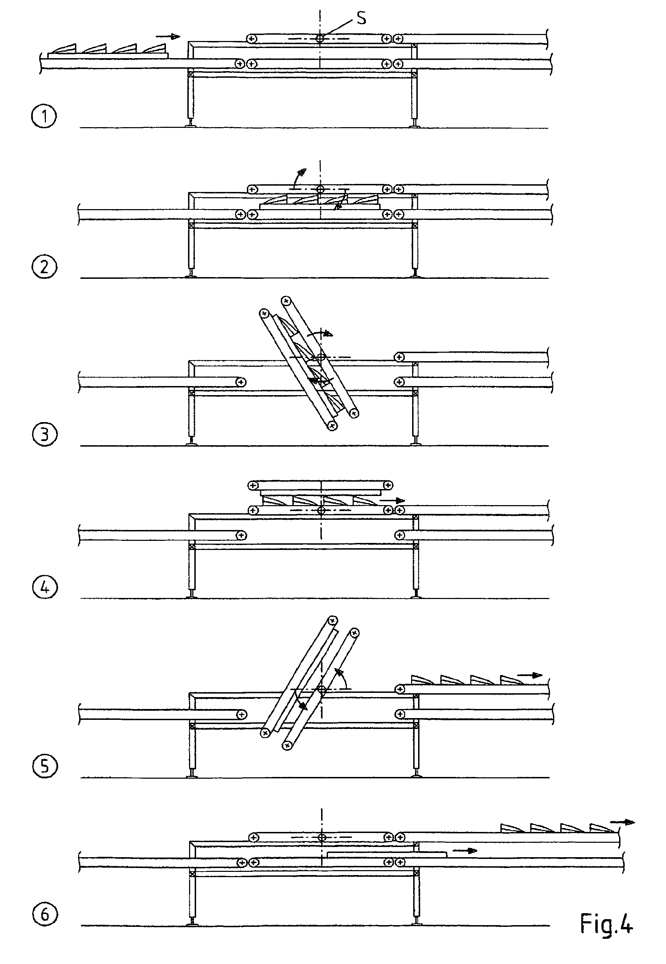

In Fig. 4 ist schließlich eine schematische Übersicht des Funktionsablaufes der erfindungsgemäßen Vorrichtung in sechs Schritten dargestellt. Die Darstellung entspricht dabei der aus den Fig. 1 und 2, so dass auf eine Wiederholung der dort bereits dargestellten Bezugszeichen verzichtet wird, um Fig. 4 nicht zu überfrachten. In einem ersten Schritte wird ein Aufnahmebehältnis mit darauf angeordneten Gegenständen, hier keilförmigen Packungen der Schwenkeinheit in Richtung des eingezeichneten Pfeiles zugeführt (Schritt ①). Die Schwenkachse der Schwenkeinheit ist dabei mit den Bezugszeichen S gekennzeichnet. In Schritt ② werden die Gegenstände in der Schwenkeinheit zwischen Oberband und Unterband eingeklemmt. Schritt ③ zeigt nun die Verschwenkung der Schwenkeinheit um die Schwenkachse S in die Endstellung, wie sie in Schritt ④ dargestellt ist. Nach Anheben des arretierten Aufnahmebehältnisses können die Gegenstände in Richtung des Pfeiles über die obere Übergabeeinrichtung nach rechts weiterbefördert werden und nach Verlassen der Schwenkeinheit kann dieses wieder in den Ausgangszustand zurückverschwenkt werden, wie in Schritt ⑤ dargestellt. Schritt ⑥ zeigt schließlich, dass das Aufnahmebehältnis über die untere Übergabeeinrichtung gleichfalls in Transportrichtung abtransportiert wird.

Soll die erfindungsgemäße Vorrichtung zum Beladen eingesetzt werden, so erfolgt dies durch umgekehrte Reihenfolge der Schrittfolge von Schritt ⑥ bis Schritt ①.

Zum zuverlässigen Entladen aller einzelner Gegenstände aus dem Aufnahmebehältnis kann (nicht dargestellt) die Schwenkeinheit über entsprechende Dorne, Ausstoßer od. dgl. verfügen, damit ein unbeabsichtigtes "Festkleben" und damit Anheben einzelner Gegenstände beim Freigeben des Aufnahmebehältnis 1 zuverlässig ausgeschlossen werden kann.

Es ist schnell ersichtlich, dass die erfindungsgemäße Vorrichtung durch die enthaltenen unterschiedlichen Segmente modular aufgebaut sein kann und sich äußerst flexibel an die Verhältnisse der nachgeschalteten Einrichtungen/Maschinen anpassen lässt. Insbesondere ist es möglich, dass die einzelnen Bänder mehrere Linien aufweisen, so dass neben dem eigentlichen Entladen auch noch eine Vereinzelung der entladenen Gegenstände erfolgen kann. Darüber hinaus lässt sich durch vertikale Verfahrbarkeit oder geneigte oder verschwenkbare Transportbänder auch in der Vertikalen eine beliebige Anpassbarkeit erreichen. Dies gilt insbesondere auch für solche Anwendungen, bei denen die Gegenstände von der Schwenkeinheit nur um 90° verschwenkt werden, und von der Anlage frei zu kommen.

## Patentansprüche

1. Vorrichtung zum Entladen einer Mehrzahl in oder auf einem oben offenen Aufnahmebehältnis (1) angeordneter Gegenstände (P), insbesondere Packungen oder Verpackungen aller Art, wobei das Aufnahmebehältnis über eine Zuführeinheit (2) vereinzelt zuführbar ist, wobei eine Schwenkeinheit (3) zur Aufnahme wenigstens eines Aufnahmebehältnisses (1) mittels wenigstens einer Fördereinrichtung vorgesehen ist, wobei die Schwenkeinheit (3) im wesentlichen aus zwei parallelen Ebenen mit variablem Abstand besteht, zwischen denen das wenigstens eine Aufnahmebehältnis (1) gemeinsam mit den darin befindlichen Gegenständen (P) einklemmbar ist, und wobei die Schwenkeinheit (3) ferner eine Arretiereinrichtung (8) zum Festlegen des wenigstens einen Aufnahmebehältnisses (1) durch Verringerung des Abstandes zwischen den beiden Ebenen der Schwenkeinheit (3) aufweist,
**dadurch gekennzeichnet, dass**
jedes an der nach dem Verschwenken oben befindlichen Ebene der Schwenkeinheit (3) arretierte Aufnahmebehältnis (1) nach dem Verschwenken der Schwenkeinheit (3) um eine horizontale Schwenkachse von den Gegenständen (P) innerhalb der Schwenkeinheit (3) abhebbar ist.

2. Vorrichtung nach Anspruch 1,
**dadurch gekennzeichnet, dass**
die Schwenkachse rechtwinklig zur Transportrichtung (T) verläuft.

3. Vorrichtung nach Anspruch 1 oder 2,
**dadurch gekennzeichnet, dass**
die Schwenkeinheit (3) mehrere parallele Fördereinrichtungen aufweist.

4. Vorrichtung nach einem der Ansprüche 1 bis 3,
**dadurch gekennzeichnet, dass**
die Arretiereinrichtung (8) eine Zentriereinheit umfasst.

5. Vorrichtung nach einem der Ansprüche 1 bis 4,
**dadurch gekennzeichnet, dass**
der Schwenkeinheit (3) wenigstens eine Übergabeeinheit (9, 9') nachgeschaltet ist.

6. Vorrichtung nach einem der Ansprüche 1 bis 5,
**dadurch gekennzeichnet, dass**
zum Transport der Aufnahmebehältnisse (1) und/oder vereinzelten Gegenstände (8) angetriebene Rollenbahnen oder andere geeignete Transporteinrichtungen wie Bänder, Ketten, Riemen od. dgl. vorgesehen sind, die über Antriebsrollen (6) und/oder Umlenkrollen (7) verfügen.

7. Vorrichtung nach Anspruch 6,
**dadurch gekennzeichnet, dass**
die Antriebs- und Umlenkrollen verschiedene Durchmesser aufweisen.

8. Vorrichtung nach Anspruch 6 oder 7,
**dadurch gekennzeichnet, dass**
zwischen Antriebs- und Umlenkrollen zusätzliche Stützelemente vorgesehen sind.

9. Vorrichtung nach einem der Ansprüche 5 bis 8,
**dadurch gekennzeichnet, dass**
die Übergabeeinheit (9, 9') mehrere parallele Fördereinrichtungen aufweist.

10. Verfahren zum Entladen von einer Mehrzahl in oder auf einem oben offenen Aufnahmebehältnis angeordneter Gegenstände, insbesondere quaderförmiger Packungen, **gekennzeichnet durch** die folgenden Schritte:
- Zuführen eines Aufnahmebehältnisses an eine Schwenkeinheit im Wesentlichen aus zwei parallelen Ebenen mit variablem Abstand,
- Arretieren des Aufnahmebehältnisses auf der Schwenkeinheit mittels einer Arretiereinheit zum Festlegen des Aufnahmebehältnisses **durch** Verringerung des Abstandes zwischen den beiden Ebenen der Schwenkeinheit,
- Niederhalten der Gegenstände im Aufnahmebehältnis,
- Verschwenken der Schwenkeinheit um 180° um eine horizontale Achse,
- Freigeben der Gegenstände **durch** Anheben des an der nach dem Verschwenken oben befindlichen Ebene der Schwenkeinheit arretierten Aufnahmebehältnisses und
- Weitertransport der freigegebenen Gegenstände.

11. Verfahren nach Anspruch 10,
**dadurch gekennzeichnet, dass**
das Arretieren des Aufnahmebehältnisses und das Niederhalten der Gegenstände gleichzeitig erfolgen.

12. Verfahren nach Anspruch 10 oder 11,
**dadurch gekennzeichnet, dass**
die Gegenstände beim Anheben des arretierten und verschwenkten Aufnahmebehältnisses mittels Ausstoßern o. dgl. Zuverlässig vom Aufnahmebehältnis getrennt werden.

13. Verfahren nach einem der Ansprüche 10 bis 12,
**dadurch gekennzeichnet, dass**
das arretierte Aufnahmebehältnis nach dem Freigeben der Gegenstände aus der Schwenkeinheit entfernt wird.

14. Verfahren nach Anspruch 13,
**dadurch gekennzeichnet, dass**
der Transport des leeren Aufnahmebehältnisses rechtwinklig zur Transportrichtung der Gegenstände verläuft.

15. Verfahren nach einem der Ansprüche 10 bis 14,
**dadurch gekennzeichnet, dass**
die Schwenkeinheit höhenverstellbar ausgeführt ist.

16. Verfahren nach Anspruch 15,
**dadurch gekennzeichnet, dass**
die freigegebenen Gegenstände über in unterschiedlichen Höhen angeordneten Übergabeeinheiten aus der Schwenkeinheit abtransportiert werden.

17. Verfahren zum Beladen von einer Mehrzahl von Gegenständen auf oder in ein oben offenes Aufnahmebehältnis, wobei die Verfahrensschritte aus Anspruch 10 in umgekehrter Reihenfolge und Laufrichtung durchgeführt werden.

## Claims

1. Device for unloading a plurality of articles (P), in particular packages or packaging of all types, arranged in or on an upwardly open receiving container (1), wherein the receiving container can be guided individually over a feed unit (2), wherein a swivelling unit (3) for accepting at least one receiving container (1) by means of at least one conveying device is provided, wherein the swivelling unit (3) consists substantially of two parallel planes of variable interspacing, between which can be clamped the at least one receiving container (1) together with the articles (P) located thereon, and wherein the swivelling unit (3) furthermore comprises an arresting device (8) for fixing the at least one receiving container (1) by reducing the interspacing between the two planes of the swivelling unit (3), **characterised in that** each receiving container (1) arrested on the upper situated plane of the swivelling unit (3) can, after the swivelling, be lifted from the articles (P) within the swivelling unit (3) after the swivelling unit (3) has swivelled about a horizontal swivel axis.

2. Device according to claim 1, **characterised in that** the swivel axis extends at right angles to the transportation direction (T).

3. Device according to claim 1 or 2, **characterised in that** the swivelling unit (3) comprises a plurality of parallel conveying devices.

4. Device according to one of claims 1 to 3, **characterised in that** the arresting device (8) comprises a centring unit.

5. Device according to one of claims 1 to 4, **characterised in that** at least one transfer unit (9, 9') is connected downstream of the swivelling unit (3).

6. Device according to one of claims 1 to 5, **characterised in that** driven roller conveyors or other suitable transporting devices such as bands, chains, belts or the like, which have drive rollers (6) and/or deflection rollers (7), are provided for transporting the receiving containers (1) and/or individual articles (8).

7. Device according to claim 6, **characterised in that** the drive rollers and deflection rollers have different diameters.

8. Device according to claim 6 or 7, **characterised in that** additional supporting elements are provided between the drive rollers and deflection rollers.

9. Device according to one of claims 5 to 8, **characterised in that** the transfer unit (9, 9') comprises a plurality of parallel conveying devices.

10. Method for unloading a plurality of articles, in particular cuboid packagings, arranged in or on an upwardly open receiving container, **characterised by** the following steps:
- guiding a receiving container to a swivelling unit substantially of two parallel planes of variable interspacing,
- arresting the receiving container on the swivelling unit by means of an arresting unit in order to fix the receiving container by reducing the interspacing between the two planes of the swivelling unit,
- holding down the articles in the receiving container,
- swivelling the swivelling unit by 180° about a horizontal axis,
- releasing the articles by lifting the receiving container arrested on the upper located plane of the swivelling, unit after the swivelling, and
- further transporting of the released articles.

11. Method according to claim 10, **characterised in that** the arresting of the receiving container and the holding down of the articles take place simultaneously.

12. Method according to claim 10 or 11, **characterised in that** when the arrested and swivelled receiving container is lifted the articles are reliably removed from the receiving container by ejectors or the like.

13. Method according to one of claims 10 to 12, **characterised in that** the arrested receiving device is removed from the swivelling unit after the articles have been released.

14. Method according to claim 13, **characterised in that** the transporting of the empty receiving container takes place at right angles to the transporting direction of the articles.

15. Method according to one of claims 10 to 14, **characterised in that** the swivelling unit is designed to be height-adjustable.

16. Method according to claim 15, **characterised in that** the released articles are transported away from the swivelling unit by transfer units arranged at different heights.

17. Method for loading a plurality of articles onto or into an upwardly open receiving container, wherein the process of steps in claim 10 are carried out in the reverse order and in the reverse running direction.

## Revendications

1. Dispositif de déchargement d'une pluralité d'objets (P), qui sont disposés dans ou sur un conteneur de réception (1), en particulier des paquets ou des emballages de tout genre, le conteneur de réception (1) pouvant être amené individuellement par l'intermédiaire d'une unité d'approvisionnement (2), sachant qu'est prévue une unité de pivotement (3), destinée à recevoir au moins un conteneur de réception (1) au moyen d'au moins un système de transport, ladite unité de pivotement (3) consistant essentiellement en deux plans parallèles à intervalle variable, entre lesquels le conteneur de réception (1) au moins prévu peut être coincé en commun avec les objets (P) qu'il contient, et sachant que l'unité de pivotement (3) est dotée, en outre, d'un dispositif de blocage (8), qui est destiné à fixer le conteneur de réception (1) au moins prévu par réduction de l'intervalle entre les deux plans de l'unité pivotante (3),
**caractérisé en ce que**
chaque conteneur de réception (1), bloqué sur le plan de l'unité de pivotement (3) situé en haut après le pivotement, peut être soulevé au-dessus des objets (P) au sein de l'unité de pivotement (3), après le pivotement de ladite unité de pivotement (3) autour d'un axe de pivotement horizontal.

2. Dispositif selon la revendication 1,
**caractérisé en ce que**
l'axe de pivotement s'étend à angle droit par rapport à la direction de transport (T).

3. Dispositif selon les revendications 1 ou 2,
**caractérisé en ce que**
l'unité de pivotement (3) est dotée de plusieurs installations de transport parallèles.

4. Dispositif selon l'une des revendications 1 à 3,
**caractérisé en ce que**
le dispositif de blocage (8) est doté d'une unité de centrage.

5. Dispositif selon l'une des revendications 1 à 4,
**caractérisé en ce que**
au moins une unité de transfert (9, 9') est connectée en aval de l'unité de pivotement (3).

6. Dispositif selon l'une des revendications 1 à 5,
**caractérisé en ce que,**
pour le transport des conteneurs de réception (1) et / ou d'objets individuels (8), sont prévus des transporteurs à rouleaux ou d'autres dispositifs de transport appropriés, tels que bandes, chaînes, courroies ou similaires, qui sont dotés de rouleaux de commande (6) et / ou de renvoi (7).

7. Dispositif selon la revendication 6
**caractérisé en ce que**
les rouleaux de commande et / ou de renvoi présentent des diamètres différents.

8. Dispositif selon revendications 6 ou 7,
**caractérisé en ce que**
des éléments de support supplémentaires sont prévus entre les rouleaux de commande et / ou de renvoi.

9. Dispositif selon l'une des revendications 5 à 8,
**caractérisé en ce que**
l'unité de transfert (9, 9') est dotée de plusieurs dispositifs de transport parallèles.

10. Procédé de déchargement d'une pluralité d'objets, qui sont disposés dans ou sur un conteneur de réception ouvert sur le dessus, en particulier des paquets en forme de parallélépipèdes, **caractérisé par** les étapes suivantes :
- amenée d'un conteneur de réception à une unité de pivotement comprenant essentiellement deux plans parallèles à intervalle variable,
- blocage du conteneur de réception sur l'unité de pivotement au moyen d'une unité de blocage, qui est destinée à fixer le conteneur de réception par réduction de l'intervalle entre les deux plans de l'unité de pivotement,
- maintien des objets dans le conteneur de réception,
- pivotement de 180° de l'unité de pivotement autour d'un axe horizontal,
- déchargement des objets par soulèvement du conteneur de réception bloqué sur le plan de l'unité de pivotement situé en haut après le pivotement
et
- transport ultérieur des objets déchargés.

11. Procédé selon l'une des revendications 10,
**caractérisé en ce que**
le blocage du conteneur de réception et le maintien des objets sont effectués simultanément.

12. Procédé selon revendication 10 ou 11,
**caractérisé en ce que,**
lors du soulèvement du conteneur de réception bloqué et pivoté, les objets sont séparés de manière sûre dudit conteneur de réception au moyen de dispositifs de déchargement ou similaires.

13. Procédé selon l'une des revendications 10 à 12,
**caractérisé en ce que**
le conteneur de réception bloqué est enlevé après le déchargement des objets hors de l'unité pivotante.

14. Procédé selon la revendication 13,
**caractérisé en ce que**
le transport des conteneurs de réception vides est effectué à angle droit par rapport la direction de transport des objets.

15. Procédé selon l'une des revendications 10 à 14,
**caractérisé en ce que**
l'unité de pivotement est de conception réglable en hauteur.

16. Procédé selon la revendication 15,
**caractérisé en ce que**
les objets déchargés sont transportés par l'intermédiaire d'unités de transfert, qui sont disposées à des hauteurs différentes.

17. Procédé de chargement d'une pluralité d'objets sur ou dans un conteneur de réception (1) ouvert sur le dessus, sachant que les étapes du processus selon la revendication 10 sont exécutées dans l'ordre et dans la direction de marche inverses.
